# EUROPÄISCHE PATENTSCHRIFT

(11) **EP 2 291 646 B1**
(45) Veröffentlichungstag und Bekanntmachung des Hinweises auf die Patenterteilung: **21.09.2011**
(21) Anmeldenummer: 09765424.8
(22) Anmeldetag: 19.03.2009
(51) Int. Cl.: G01N 27/90

(54) **VORRICHTUNG ZUR DETEKTION VON SCHÄDIGUNGEN EINES PRÜFKÖRPERS AUS FERROMAGNETISCHEM MATERIAL**
DEVICE FOR DETECTING DAMAGE OF A TEST SPECIMEN MADE OF FERROMAGNETIC MATERIAL
DISPOSITIF DE DÉTECTION DES DÉTÉRIORATIONS D'UNE ÉPROUVETTE EN MATÉRIAU FERROMAGNÉTIQUE

(30) Priorität: 21.06.2008 DE 102008029525
(43) Veröffentlichungstag der Anmeldung: 09.03.2011
(73) Patentinhaber: Rohmann, Juergen, 67271 Battenberg (DE)
(72) Erfinder: Rohmann, Juergen, 67271 Battenberg (DE)
(74) Vertreter: Meyer-Roedern, Giso
(86) Internationale Anmeldenummer: PCT/DE2009/000384
(87) Internationale Veröffentlichungsnummer: WO 2009/152788

(56) Entgegenhaltungen:
- DE-A1- 1 912 399
- DE-A1-102004 045 271
- US-A- 3 535 624
- US-A- 5 331 278
- KRAUSE H-J ET AL: "SQUID system for magnetic inspection of prestressed tendons on concrete bridges" INSIGHT: NON-DESTRUCTIVE TESTING AND CONDITION MONITORING JULY 2001 BRITISH INSTITUTE OF NON-DESTRUCTIVE TESTING GB, Bd. 43, Nr. 7, Juli 2001 (2001-07), Seiten 458-461, XP002974149

## Beschreibung

Die Erfindung betrifft eine Vorrichtung zur Detektion von herstellungs- oder betriebsbedingten Schädigungen eines Prüfkörpers aus ferromagnetischem Material mit einer Magnetisiereinrichtung, die ein magnetisches Gleichfeld erzeugt, dem der Prüfkörper ausgesetzt ist, um ihn zu magnetisieren, wobei Magnetisiereinrichtung und Prüfkörper eine Relativbewegung zueinander vollführen, durch die Wirbelströme in dem Prüfkörper induziert werden, und wobei die Magnetisiereinrichtung wenigstens ein Joch mit Auslage in Relativbewegungsrichtung hat, und mit einer in Relativbewegungsrichtung gegen die Magnetisiereinrichtung rückversetzten ersten Sonde, die Fehlstellen anhand von deren Einfluß auf die induzierten Wirbelströme nachzuweisen geeignet ist.

Eine solche Vorrichtung ist aus der DE 10 2004 045 271 A1 bekannt. Die Vorrichtung ist speziell, aber nicht ausschließlich für die Prüfung verlegter Eisenbahnschienen vorgesehen.

Eisenbahnschienen unterliegen im laufenden Betrieb einer Materialermündung und einem Verschleiß, die die Ausbildung typischer Schädigungen zur Folge haben. Exemplarisch erwähnt seien Squats und Head Checks. Squats sind unterhalb der Schienenoberseite liegende flächige Trennungen, die vorwiegend parallel zur Oberfläche verlaufen. Head Checks sind schräg liegende Risse im Bereich der Fahrkante, die vorwiegend in den Bögen an der Außenschiene auftreten. Auch können Eisenbahnschienen dellenartige Schädigungen haben, die durch den Schlupf der Räder beim Anfahren oder Bremsen auftreten.

Materialschädigungen an Eisenbahnschienen können eine Schädigungstiefe von mehreren mm haben. Es gilt, in einem automatisierten Prüfablauf die Schädigungen zu erkennen, exakt zu lokalisieren und in ihrem Gefährdungspotential zu bewerten, wofür einer quantitativen Erfassung der Schädigungstiefe große Bedeutung zukommt.

Zu prüfende Eisenbahnschienen werden mit einem schienengebundenen Fahrzeug abgefahren, das die Prüfvorrichtung mit sich führt. Angestrebt wird eine Fahrgeschwindigkeit von mehreren zig Kilometern, wenn nicht hundert Kilometern und mehr pro Stunde, eine Schädigungsdetektionstiefe von mehreren mm und eine so hohe Genauigkeit der Schädigungslokalisation, daß sich eine jede Schädigung garantiert wieder auffinden läßt.

Die Vorrichtung nach der DE 10 2004 045 271 A1 ist geeignet, bei hoher Relativgeschwindigkeit zwischen dem Prüfkörper und der Magnetisiereinrichtung Schädigungen großer Tiefe nachzuweisen, genau zu lokalisieren und in ihrer Tiefe quantitativ zu erfassen.

Eine Vorrichtung gemäß Oberbegriff des Anspruchs 1 wird in US 3 535 624 beschrieben.

Aufgabe der Erfindung ist es, mit einer Vorrichtung der eingangs genannten Gattung die Art, den Ort und den Schweregrad von Schädigungen noch genauer zu erfassen.

Bei der diese Aufgabe lösenden Vorrichtung ist vorzugsweise mittig zwischen den Jochschenkeln der Magnetisiereinrichtung wenigstens eine zweite Sonde angeordnet, die induzierte Wirbelströme und/oder den magnetischen Streufluß zu erfassen geeignet ist. Außerdem hat die Vorrichtung wenigstens eine dritte Sonde, die gegen die Magnetisiereinrichtung in Relativbewegungsrichtung vorversetzt und induzierte Wirbelströme und/oder den magnetischen Streufluß zu erfassen geeignet ist. Vorzugsweise befindet sich die dritte Sonde vor dem vorderen Jochschenkel der Magnetisiereinrichtung.

Versuche haben gezeigt, daß sich die Signifikanz des Schädigungsnachweises dadurch verbessern läßt, daß man die Wirbelströme und/oder den magnetischen Streufluß nicht nur in dem abklingenden magnetischen Schleppfeld, sondern zusätzlich in der Magnetisierung und überdies vor der Magnetisierung erfaßt. Durch die Detektion von Head Checks in der Magnetisierung und überdies vor der Magnetisierung läßt sich deren Schädigungstiefe mit höherer Genauigkeit bestimmen. Das ist von großer praktischer Bedeutung, da Head Checks von geringer Schädigungstiefe ökonomisch rentabel weggeschliffen werden können.

Bei einer bevorzugten Ausführungsform ist die Auslage (von Pol zu Pol Erstreckung) des Jochs der Magnetisiereinrichtung in Relativbewegungsrichtung um so größer, je höher die Relativgeschwindigkeit und je größer die gewünschte Detektionstiefe ist.

Bei einer bevorzugten Ausführungsform läßt sich die Magnetisiereinrichtung in ihrer Magnetisierungsstärke regeln. Man kann so die Magnetisierungsstärke an die gewünschte Schädigungsdetektionstiefe und den Betrag der Relativgeschwindigkeit zwischen der Magnetisiereinrichtung und dem Prüfkörper anpassen. Die Magnetisierungsstärke sollte umso größer sein, je höher die Relativgeschwindigkeit und je größer die gewünschte Detektionstiefe ist.

Bei der Magnetisiereinrichtung kann es sich um einen Permanentmagneten oder Elektromagneten handeln. Die Regelung der Magnetisierungsstärke kann mechanisch oder elektrisch erfolgen.

Bei einer bevorzugten Ausführungsform ist/sind die erste und/oder zweite(n) und/oder dritte(n) Sonde(n) ein Hall-Detektor, magnetfeldempfindlicher Halbleiterdetektor oder SQUID.

Bei einer bevorzugten Ausführungsform ist/sind die erste und/oder zweite(n) und/oder dritte(n) Sonde(n) eine oder mehrere nach dem magnetinduktiven Verfahren arbeitende(n) Sonde(n) für die Wirbelstrom-Werkstoffprüfung.

Die erfindungsgemäße Vorrichtung hat eine bevorzugte Verwendung für die Prüfung einer verlegten Eisenbahnschiene. Sie befindet sich dazu an einem schienengebundenen Fahrzeug, das die zu prüfende Schiene mit einer die Wirbelstrominduzierung bewirkenden Fahrgeschwindigkeit überfährt.

Eine weitere bevorzugte Verwendung hat die erfindungsgemäße Vorrichtung für die Prüfung rotationssymmetrischer Prüfkörper. Dabei ist an Räder, insbesondere Eisenbahnräder, Rundstäbe, Rohre und anderes Rundmaterial mit Voll- oder Hohlkörper zu denken. Bei der Prüfung befinden sich die Vorrichtung und der Prüfkörper in einer die Wirbelstrominduzierung bewirkenden Relativdrehung zueinander. Vorzugsweise ist die Vorrichtung bei der Prüfung stationär und der Prüfkörper in Drehung um eine Zentralachse angetrieben.

Die Erfindung wird im folgenden anhand der Zeichnung näher erläutert. Es zeigen:
- Fig. 1: die schematische Seitenansicht eines Prüfkörpers und einer Magnetisiereinrichtung in Ruhe, d. h. bei Relativgeschwindig- keit Null; und
- Fig. 2: dasselbe bei einer Relativgeschwindigkeit v₁ ungleich Null.

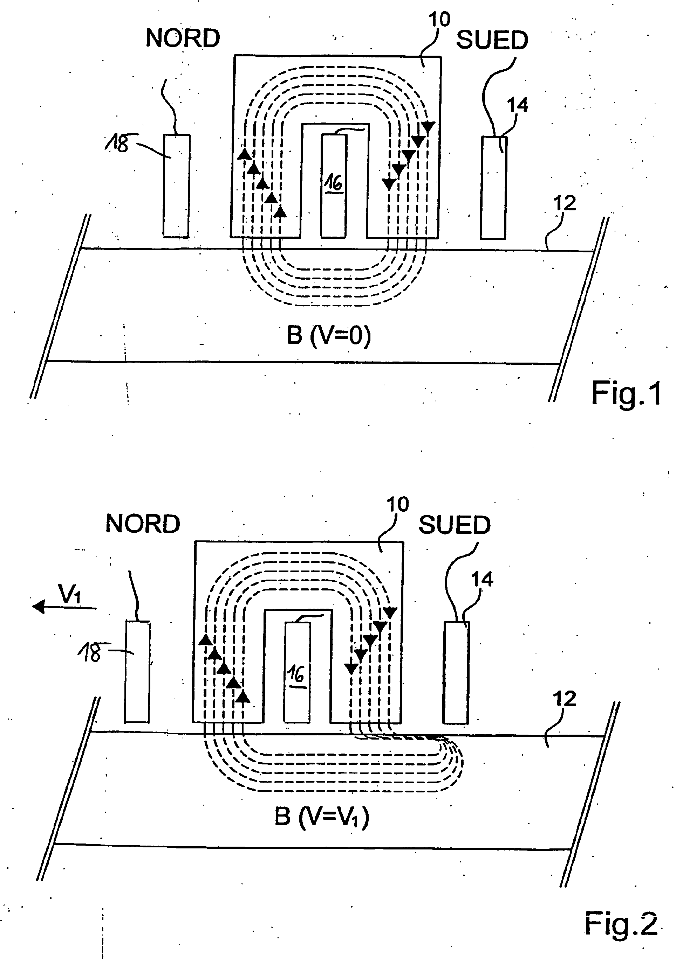

Fig. 1 und Fig. 2 zeigen das Joch 10 einer Magnetisiereinrichtung, die ein magnetisches Gleichfeld B erzeugt. Vor dem Joch 10 liegt mit einem Luftspalt ein Prüfkörper 12, über den der magnetische Kreis geschlossen ist.

Fig. 1 zeigt den magnetischen Feldlinienverlauf, wenn sich Prüfkörper 12 und Magnetisiereinrichtung in Ruhe befinden, d. h. eine Relativgeschwindigkeit v ist gleich Null haben. Fig. 2 zeigt den Feldlinienverlauf bei einer Relativgeschwindigkeit v₁ ungleich Null. Es tritt ein in Bewegungsrichtung rückversetztes magnetisches Bremsfeld (Schleppfeld) auf, in dessen Bereich Wirbelströme induziert werden. Dieses Phänomen ist von der Wirbelstrombremse her bekannt.

Die durch die Relativbewegung induzierten Wirbelströme werden zur Detektion von Schädigungen des Prüfkörpers 12 herangezogen. Die Schädigungen haben einen Einfluß auf die Wirbelströme, der mit einer in Bewegungsrichtung gegen die Magnetisiereinrichtung rückversetzten ersten Sonde 14 erfaßt werden kann.

Eine zweite Sonde 16 ist mittig zwischen den Jochschenkeln der Magnetisiereinrichtung, und eine dritte Sonde 18 in Relativbewegungsrichtung vor dem vorderen Jochschenkel der Magnetisiereinrichtung angeordnet.

### Liste der Bezugszeichen

- 10: Joch
- 12: Prüfkörper
- 14: erste Sonde
- 16: zweite Sonde
- 18: dritte Sonde

## Patentansprüche

1. Vorrichtung zur Detektion von herstellungs- oder betriebsbedingten Schädigungen eines Prüfkörpers (12) aus ferromagnetischem Material mit einer Magnetisiereinrichtung, die ein magnetisches Gleichfeld erzeugt, dem der Prüfkörper (12) ausgesetzt ist, um ihn zu magnetisieren, wobei Magnetisiereinrichtung und Prüfkörper (12) eine Relativbewegung zueinander vollführen, durch die Wirbelströme in dem Prüfkörper (12) induziert werden, und wobei die Magnetisiereinrichtung wenigstens ein Joch (10) mit Auslage in Relativbewegungsrichtung hat, mit einer in Relativbewegungsrichtung gegen die Magnetisiereinrichtung rückversetzten ersten Sonde (14), die Fehlstellen anhand von deren Einfluß auf die induzierten Wirbelströme nachzuweisen geeignet ist, mit wenigstens einer zwischen den Jochschenkeln der Magnetisiereinrichtung angeordneten zweiten Sonde (16), die induzierte Wirbelströme und/oder den magnetischen Streufluß zu erfassen geeignet ist, **gekennzeichnet durch** wenigstens eine gegen die Magnetisiereinrichtung in Relativbewegungsrichtung vorversetzte dritte Sonde (18), die induzierte Wirbelströme und/oder den magnetischen Streufluss zu erfassen geeignet ist.

2. Vorrichtung nach Anspruch 1, **dadurch gekennzeichnet, daß** die zweite Sonde (16) mittig zwischen den Jochschenkeln der Magnetisiereinrichtung angeordnet ist.

3. Vorrichtung nach Anspruch 1 oder 2, **dadurch gekennzeichnet, daß** sich die dritte Sonde (18) vor dem vorderen Jochschenkel der Magnetisiereinrichtung befindet.

4. Vorrichtung nach einem der Ansprüche 1 bis 3, **dadurch gekennzeichnet, daß** die Auslage des Jochs (10) in Relativbewegungsrichtung um so größer ist, je höher die Relativgeschwindigkeit und je größer die gewünschte Detektionstiefe ist.

5. Vorrichtung nach einem der Ansprüche 1 bis 4, **dadurch gekennzeichnet, daß** die Magnetisiereinrichtung in ihrer Magnetisierungsstärke regelbar ist.

6. Vorrichtung nach einem der Ansprüche 1 bis 5, **dadurch gekennzeichnet, daß** die Magnetisiereinrichtung ein Permanentmagnet ist.

7. Vorrichtung nach einem der Ansprüche 1 bis 5, **dadurch gekennzeichnet, daß** die Magnetisiereinrichtung ein Elektromagnet ist.

8. Vorrichtung nach einem der Ansprüche 1 bis 7, **dadurch gekennzeichnet, daß** die erste und/oder zweite und/oder dritte Sonde (14, 16, 18) ein Hall-Detektor, magnetfeldempfindlicher Halbleiterdetektor oder SQUID ist.

9. Vorrichtung nach einem der Ansprüche 1 bis 7, **dadurch gekennzeichnet, daß** die erste und/oder zweite und/oder dritte Sonde (14, 16, 18) eine nach dem magnetinduktiven Verfahren arbeitende Sonde (14, 16, 18) für die Wirbelstrom-Werkstoffprüfung ist.

10. Verwendung einer Vorrichtung nach einem der Ansprüche 1 bis 9 für die Prüfung einer verlegten Eisenbahnschiene, bei der sich die Vorrichtung an einem schienengebundenen Fahrzeug befindet, das die zu prüfende Schiene mit einer die Wirbelstrominduzierung bewirkenden Fahrgeschwindigkeit überfährt.

11. Verwendung einer Vorrichtung nach einem der Ansprüche 1 bis 9 für die Prüfung eines rotationssymmetrischen Prüfkörpers, insbesondere eines Rads, eines Rundstabs oder eines Rohrs, wobei sich die Vorrichtung und der Prüfkörper in einer die Wirbelstrominduzierung bewirkenden Relativdrehung zueinander befinden.

12. Verwendung nach Anspruch 11, **dadurch gekennzeichnet, daß** die Vorrichtung stationär und der Prüfkörper in Drehung um eine Zentralachse angetrieben ist.

## Claims

1. Device for detecting manufacture-related or operation-related damage sites of a test specimen (12) made of ferromagnetic material, the device having a magnetization unit, which generates a constant magnetic field, to which the test specimen (12) is exposed in order to magnetize it, wherein the magnetization unit and test specimen (12) move relative to one another, thus inducing eddy currents in the test specimen (12), and wherein the magnetization unit has at least one yoke (10) with width in the direction of the relative motion, the device also having a first sensor (14) set back from the magnetization unit in the direction of the relative motion, which first sensor (14) is suitable for detecting defect sites on the basis of their influence on the induced eddy currents, the device also having at least one second sensor (16) disposed between the arms of the yoke of the magnetization unit, which second sensor (16) is suitable for measuring induced eddy currents and/or the magnetic leakage flux, **characterized by** at last one third sensor (18) set ahead of the magnetization unit in the direction of the relative motion, which third sensor (18) is suitable for measuring induced eddy currents and/or the magnetic leakage flux.

2. Device according to claim 1, **characterized in that** the second sensor (16) is disposed centrally between the arms of the yoke of the magnetization unit.

3. Device according to claim 1 or 2, **characterized in that** the third sensor (18) is disposed ahead of the front arm of the yoke of the magnetization unit.

4. Device according to one of claims 1 to 3, **characterized in that** the width of the yoke (10) in the direction of the relative motion is all the much greater, the higher the relative velocity and the greater the desired detection depth is.

5. Device according to one of claims 1 to 4, **characterized in that** the magnetization intensity of the magnetization unit can be regulated.

6. Device according to one of claims 1 to 5, **characterized in that** the magnetization unit is a permanent magnet.

7. Device according to one of claims 1 to 5, **characterized in that** the magnetization unit is an electromagnet.

8. Device according to one of claims 1 to 7, **characterized in that** the first and/or second and/or third sensor (14, 16, 18) is a Hall-effect detector, a magnetic-field sensitive semiconductor or a SQUID.

9. Device according to one of claims 1 to 7, **characterized in that** the first and/or second and/or third sensor (14, 16, 18) is a sensor (14, 16, 18) operating according to the magnetic induction technique for eddy-current testing of materials.

10. Use of a device according to one of claims 1 to 9 for testing a laid railroad rail, wherein the device is disposed on a rail-mounted vehicle traveling over the rail to be tested at a velocity causing the induction of eddy currents.

11. Use of a device according to one of claims 1 to 9 for testing a rotationally symmetric test specimen, especially a wheel, a round bar or a tube, wherein the device and the test specimen rotate relative to one another in a manner that causes the induction of eddy currents.

12. Use according to claim 11, **characterized in that** the device is stationary, while the test specimen is driven in rotation around a central axis.

## Revendications

1. Dispositif de détection de détériorations dues à la fabrication ou à l'exploitation d'un échantillon (12) en matériau ferromagnétique avec un équipement d'aimantation générant un champ magnétique équidirectionnel auquel est exposé l'échantillon (12) en vue de son aimantation, dans lequel l'équipement d'aimantation et l'échantillon (12) exécutent un mouvement relatif l'un par rapport à l'autre qui induit des courants de Foucault dans l'échantillon (12), et dans lequel l'équipement d'aimantation présente au moins une culasse (10) avec une saillie dans la direction de mouvement relatif, avec une première sonde (14) reculée dans la direction de mouvement par rapport à l'équipement d'aimantation, ladite sonde étant adaptée pour déceler les endroits défectueux par leur influence sur les courants de Foucault induits, avec au moins une deuxième sonde (16) disposée entre les branches de culasse de l'équipement d'aimantation, ladite sonde étant adaptée pour détecter les courants de Foucault induits et/ou le flux de dispersion magnétique, **caractérisé par** au moins une troisième sonde (18) avancée dans la direction de mouvement relatif par rapport à l'équipement d'aimantation, ladite sonde étant adaptée pour détecter les courants de Foucault induits et/ou le flux de dispersion magnétique.

2. Dispositif selon la revendication 1, **caractérisé en ce que** la deuxième sonde (16) est disposée au centre entre les branches de culasse de l'équipement d'aimantation.

3. Dispositif selon la revendication 1 ou 2, **caractérisé en ce que** la troisième sonde (18) se trouve devant la branche de culasse avant de l'équipement d'aimantation.

4. Dispositif selon l'une quelconque des revendications 1 à 3, **caractérisé en ce que** la saillie de la culasse (10) dans la direction de mouvement relatif est d'autant plus grande que la vitesse relative est élevée et que la profondeur de détection souhaitée est grande.

5. Dispositif selon l'une quelconque des revendications 1 à 4, **caractérisé en ce que** l'équipement d'aimantation est réglable au niveau de son intensité d'aimantation.

6. Dispositif selon l'une quelconque des revendications 1 à 5, **caractérisé en ce que** l'équipement d'aimantation est un aimant permanent.

7. Dispositif selon l'une quelconque des revendications 1 à 5, **caractérisé en ce que** l'équipement d'aimantation est un électroaimant.

8. Dispositif selon l'une quelconque des revendications 1 à 7, **caractérisé en ce que** la première et/ou la deuxième et/ou la troisième sonde (14, 16, 18) est un détecteur de Hall, un détecteur semi-conducteur sensible aux champs magnétiques ou un SQUID.

9. Dispositif selon l'une quelconque des revendications 1 à 7, **caractérisé en ce que** la première et/ou la deuxième et/ou la troisième sonde (14, 16, 18) est une sonde (14, 16, 18) fonctionnant selon un procédé à induction magnétique pour l'essai des matériaux par courants de Foucault.

10. Utilisation d'un dispositif selon l'une quelconque des revendications 1 à 9 pour l'essai d'un rail ferroviaire posé, dans laquelle le dispositif se trouve dans un véhicule sur rails qui roule sur le rail à tester à une vitesse de conduite provoquant l'induction des courants de Foucault.

11. Utilisation d'un dispositif selon l'une quelconque des revendications 1 à 9 pour l'essai d'un échantillon à symétrie de révolution, en particulier d'une roue, d'une barre ronde ou d'un tuyau, dans laquelle le dispositif et l'échantillon se trouvent dans une rotation relative l'un par rapport à l'autre qui provoque l'induction des courants de Foucault.

12. Utilisation selon la revendication 11, **caractérisé en ce que** le dispositif est stationnaire et l'échantillon est entraîné en rotation autour d'un axe central.
